# EUROPEAN PATENT APPLICATION

(11) **EP 2 880 985 A1**
(43) Date of publication of application: **10.06.2015**
(21) Application number: 13825351.3
(22) Date of filing: 30.07.2013
(51) Int. Cl.: A23C 11/10, A23C 21/04, A23L 1/10, A23L 1/187

(54) **DAIRY PRODUCT-LIKE PROCESSED FOOD AND MANUFACTURING METHOD THEREFOR**

(30) Priority: 01.08.2012 JP 2012171326
(71) Applicant: MEIJI CO., LTD, Koto-ku Tokyo 136-8908 (JP)
(72) Inventor: NARAHARA, Yoshiharu, Odawara-shi Kanagawa 250-0862 (JP); HORIUCHI, Hiroshi, Odawara-shi Kanagawa 250-0862 (JP); ECHIZEN, Hiroshi, Odawara-shi Kanagawa 250-0862 (JP); KITAMURA, Yutaka, Tsukuba-shi Ibaraki 305-8577 (JP)
(74) Representative: Grünecker Patent- und Rechtsanwälte PartG mbB
(86) International application number: PCT/JP2013/070533
(87) International publication number: WO 2014/021286

(57) **Abstract**

A dairy product-like processed food which enables rice to be consumed and a method of manufacturing the same are provided. The dairy product-like processed food contains rice. This processed food may be a processed food in which rice slurry containing ground rice and a dispersion medium, rice flour, glutinous rice flour, or top-grade rice flour is mixed therein. The method of manufacturing the dairy product-like processed food includes a step of wet-grinding rice, and a step of mixing the rice slurry produced by the wet grinding with a predetermined raw material of the processed food.

## Description

### Technical Field

The present disclosure relates to a dairy product-like processed food and a method of manufacturing the same.

### Background Art

In recent years, in order to increase the consumption of rice and to improve the food self-sufficiency in Japan, various methods of using rice have been studied. For example, Non-Patent Document 1 shows productions of bread, confectioneries, noodles, and the like by using rice flour.

[Non-Patent Document 1] "Promoting the usage of rice flour", [online], Ministry of Agriculture, Forestry and Fisheries, [searched on July 4, 2012], the Internet <URL: http://www.maff.go.jp/j/seisan/keikaku/komeko/pdf/20120614.pdf>.

As mentioned above, though production of bread and the like by using rice flour has been proposed, there has been a consistent decreasing trend in the consumption of rice. Therefore, it is required to further develop methods of using rice and further accelerate the consumption of rice.

### Disclosure of Invention

The present disclosure provides a dairy product-like processed food containing rice.

Since the above-mentioned dairy product-like processed food contains rice, the consumption of rice can be accelerated by this processed food. Further, this processed food can achieve flavor and texture unique to rice. The "dairy product-like processed food" of the present disclosure refers to a processed food using other raw materials, instead of some or all of milk or milk processed product, in a so-called dairy product using milk or milk processed product as a raw material. For example, the "dairy product-like processed food" of the present disclosure may include fermented milk (including yoghurt), milk beverage, lactic acid bacteria beverage, pudding, various kinds of ice creams, and the like, but these foods may not necessarily contain milk or milk processed product. Furthermore, "rice" in the present disclosure may contain not only non-processed rice but also rice after being subjected to some process such as grinding or the like.

The present disclosure also provides a method of manufacturing a dairy product-like processed food. The method of manufacturing a dairy product-like processed food includes a step of wet-grinding rice and a step of mixing a rice slurry produced by the wet grinding with a predetermined raw material of the processed food. The "predetermined raw material of the processed food" in the present disclosure is a raw material other than the rice slurry, which is selected in accordance with the type of processed food as appropriate.

In the above-described manufacturing method, since a processed food containing rice can be manufactured, it is possible to accelerate the consumption of rice. Further, by this manufacturing method, it is possible to manufacture a processed food having flavor and texture unique to rice.

It is an object of the present disclosure to provide a dairy product-like processed food using rice and a method of manufacturing the same.

These and other objects, features, aspects and advantages of the present disclosure will become more apparent from the following detailed description of the present disclosure when taken in conjunction with the accompanying drawings.

### Brief Description of Drawings

[Fig. 1] is an elevational sectional view showing a grinding apparatus in accordance with one embodimen;
[Fig. 2] is a bottom view showing a runner stone in the grinding apparatus;
[Fig. 3] is an elevational sectional view showing a modification of the grinding apparatus;
[Fig. 4A] is a microscope image (magnification: 450 times) showing a 10 wt% aqueous solution of rice flour in Comparative Example 1-1;
[Fig. 4B] is a microscope image (magnification: 450 times) showing a 10 wt% aqueous solution of rice slurry in Example 1;
[Fig. 5A] is a microscope image (magnification: 2000 times) showing a 10 wt% aqueous solution of rice flour in Comparative Example 1-1;
[Fig. 5B] is a microscope image (magnification: 2000 times) showing a 10 wt% aqueous solution of rice slurry in Example 1;
[Fig. 6] is a graph showing respective shear stresses of rice puddings in accordance with Examples 2-1 to 2-3 and pudding in accordance with Comparative Example 2; and
[Fig. 7] is a graph showing respective shear stresses of rice puddings in accordance with Examples 3-1 and 3-2 and pudding in accordance with Comparative Example 3.

### Best Mode for Carrying Out the Invention

Hereinafter, an embodiment will be described in detail.

A dairy product-like processed food in accordance with the present embodiment contains rice. This dairy product-like processed food refers to a processed food using other raw materials, instead of some or all of milk or milk processed product, in a so-called dairy product using milk or milk processed product as a raw material. Specifically, the processed food may include various things such as fermented milk (including yoghurt), milk beverage, lactic acid bacteria beverage, pudding, various kinds of ice creams, and the like, though not particularly limited thereto. As to pudding, one type of pudding made by heating, which is made by heat coagulation of raw material liquid containing egg ingredients, milk ingredients (milk protein, whey protein, and the like), and the like to be gelatinized, is preferable since flavor and texture (through gelatinization of starch (pregelatinized) or the like) derived from rice can be effectively utilized, as compared with another type of pudding made by cooling, which is made by cooling raw material liquid containing a gelatinizer, a thickener, and the like to be gelatinized. As methods for heat coagulation of raw material liquid, there are various methods such as double-boil, steaming, baking, and the like, though not limited thereto.

In the above-described dairy product-like processed food, the solid content concentration of rice can be adjusted in accordance with the properties of the processed food and tastes of consumers as appropriate. In a case, for example, where the above-described dairy product-like processed food is pudding which does not contain egg but contains whey protein isolate (WPI) (for example, where the dairy product-like processed food is pudding containing the whey protein isolate (WPI) by 2 to 5 wt%), however, in terms of improvement of flavor and texture, it is preferable that the solid content concentration of rice should be not lower than 2.5 wt% and not higher than 10 wt%, more preferable that the solid content concentration of rice should be not lower than 3 wt% and not higher than 9 wt%, and further preferable that the solid content concentration of rice should be not lower than 3.5 wt% and not higher than 8 wt%. In another case where the above-described dairy product-like processed food is pudding which contains egg (for example, where the dairy product-like processed food is pudding containing egg (whole egg liquid) by 15 to 25 wt%), it is preferable that the solid content concentration of rice should be not lower than 1 wt% and not higher than 7 wt%, more preferable that the solid content concentration of rice should be not lower than 1.5 wt% and not higher than 6 wt%, and further preferable that the solid content concentration of rice should be not lower than 1.5 wt% and not higher than 5 wt%. In still another case where the processed food is liquid fermented milk, it is preferable that the solid content concentration of rice should be not lower than 2 wt% and not higher than 15 wt%, more preferable that the solid content concentration of rice should be not lower than 3 wt% and not higher than 13 wt%, and further preferable that the solid content concentration of rice should be not lower than 4 wt% and not higher than 12 wt%.

Further, in a case where the above-described dairy product-like processed food is pudding which does not contain egg but contains whey protein isolate (WPI) (for example, where the dairy product-like processed food is pudding containing the whey protein isolate (WPI) by 2 to 5 wt%), it is preferable that the breaking strain should range from 10 % to 45 %, more preferable that the breaking strain should range from 10 % to 40 %, further preferable that the breaking strain should range from 15 % to 35 %, and particularly preferable that the breaking strain should range from 15 % to 30 %. In another case where the above-described dairy product-like processed food is pudding which contains egg (for example, where the dairy product-like processed food is pudding containing egg (whole egg liquid) by 15 to 25 wt%), it is preferable that the breaking strength should range from 10 g/cm² to 40 g/cm², more preferable that the breaking strength should range from 15 g/cm² to 40 g/cm², further preferable that the breaking strength should range from 20 g/cm² to 40 g/cm², and particularly preferable that the breaking strength should range from 25 g/cm² to 40 g/cm².

The above-described processed food may be a processed food in which rice slurry containing particles of ground rice and a dispersion medium is mixed. In this rice slurry, if the median diameter of the rice particle is not higher than 40 µm, there is no problem in terms of dispersibility and processing suitability, but it is preferable that the median diameter should be not higher than 20 µm, more preferable that the median diameter should be not higher than 15 µm, further preferable that the median diameter should be not higher than 10 µm, and particularly preferable that the median diameter should be not higher than 8.5 µm. Further, it is preferable that the standard deviation of the particle diameter of rice should be lower than 1, more preferable that the standard deviation should be not higher than 0.8, and further preferable that the standard deviation should be not higher than 0.7. At that time, in a case, for example, where the above-described dairy product-like processed food is a gelatinous food such as pudding, glutinous texture is in a state (physical property) where the shear stress is hard to decrease even when the shear rate increases and is represented as the strength of viscoelasticity. Specifically, in the case where the above-described dairy product-like processed food is a gelatinous food such as pudding, the shear stress (temperature: 20 °C) at the shear rate of 100 (1/s) may be not lower than 200 Pa and not higher than 10000 Pa, and it is preferable that the shear stress should be not lower than 300 Pa and not higher than 5000 Pa, more preferable that the shear stress should be not lower than 500 Pa and not higher than 3000 Pa, further preferable that the shear stress should be not lower than 800 Pa and not higher than 2000 Pa, and particularly preferable that the shear stress should be not lower than 1000 Pa and not higher than 1500 Pa. Further, it is preferable that the solid content concentration of rice in the rice slurry should be not lower than 5 wt% and not higher than 20 wt%, more preferable that the solid content concentration of rice in the rice slurry should be not lower than 5 wt% and not higher than 15 wt%, and further preferable that the solid content concentration of rice in the rice slurry should be not lower than 5 wt% and not higher than 10 wt%. By setting the solid content concentration of rice in the rice slurry into the above predetermined range, it is possible to effectively reduce the particle diameter of rice and also possible to narrow the distribution of particle diameters of rice. Further, by setting the solid content concentration of rice in the rice slurry into the above predetermined range, it is possible to suppress the change in physical properties of the rice slurry and efficiently perform the processing when the rice slurry is solely disinfected or sterilized.

The rice contained in the rice slurry is not particularly limited, but it is preferable that non-glutinous rice and/or glutinous rice should be used. Table 1 shows exemplary components of some brands of non-glutinous rice (unpolished rice). Among the brands shown in Table 1, it is particularly preferable that Hokuriku 193 which contains high protein and high lipid should be used.

**[Table 1]**

| Brands | Moisture (%) | Protein (%) | Amylose (%) | Fatty Acid (mg%) | Residual Ingredients (%) |
|---|---|---|---|---|---|
| Koshihikari (Good Taste Rice Variety) | 14.0 | 6.2 | 18.5 | 16.3 | 61.3 |
| Hokuriku 193 (Super-Yielding Rice Variety) | 14.0 | 7.4 | 19.1 | 19.9 | 59.5 |
| Hokuriku 231 (Farinaceous Rice Variety) | 15.0 | 5.8 | 18.4 | 12.0 | 60.8 |
| Hokuriku-Toh 237 (Carbohydrate Rice Variety) | 10.6 | 4.6 | 18.7 | 16.9 | 66.1 |
| Hokuriku-Hai 240 (Giant Embryo Rice Variety) | 10.6 | 6.0 | 17.9 | 12.1 | 65.5 |

Hereinafter, description will be made on a method of manufacturing the above-described processed food.

First, rice slurry which is one of raw materials of the processed food in accordance with the present embodiment is produced.

Raw rice is prepared and dry-sterilized as necessary, and then immersed in liquid to be softened. At that time, it is preferable that the water content of rice should be adjusted to be about 20 %, though not particularly limited thereto. As the liquid in which the rice is to be immersed, usually running water or distilled water is used, though not particularly limited thereto only if the water is not harmful to human body. Further, in terms of prevention of proliferation of bacteria or the like, it is preferable that the temperature of the liquid should be not higher than 10 °C. The immersion time should be, for example, one hour or more, though not particularly limited thereto only if the rice can be sufficiently softened.

Next, while a dispersion medium is added to the softened rice by, e.g., 1 to 15 times by weight, the rice is wet-ground. As the dispersion medium, usually running water or distilled water is used, though not particularly limited thereto only if the dispersion medium is not harmful to human body.

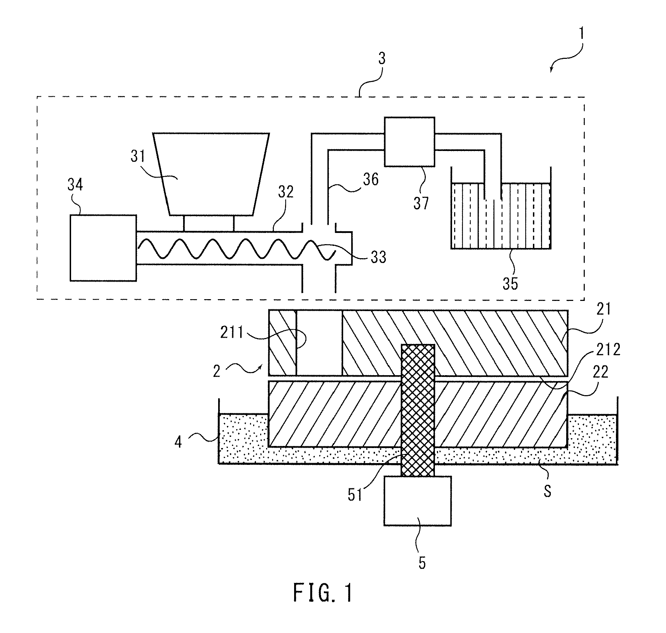

Herein, description will be made on a grinding apparatus for performing wet grinding of rice, with reference to figures. As shown in Fig. 1, a grinding apparatus 1 includes a mill 2 having a runner stone 21 and a bed stone 22, a feeder 3 for feeding rice and the dispersion medium to the mill 2, and a tray 4 for collecting the ground rice (rice slurry S).

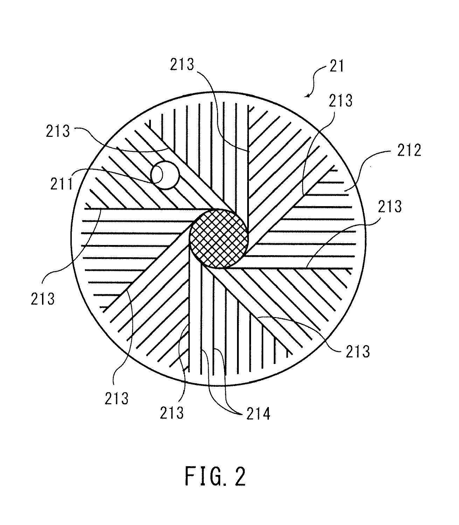

The runner stone 21 is provided with a through hole 211 passing therethrough vertically, as shown in Fig. 1. Further, the runner stone 21 has a plurality of main grooves 213 and sub-grooves 214 on its surface 212 which faces the bed stone 22, as shown in Fig. 2. Each of the main grooves 213 extends radially from the center of the surface 212 towards the outer edge thereof. Between adjacent main grooves 213, a plurality of sub-grooves 214 are formed and each of the sub-grooves 214 extends in parallel to the left-side main groove 213 in Fig. 2. Respective depths of the main groove 213 and the sub-groove 214 may be equal to or different from each other. Also in the bed stone 22, the same main grooves and sub-grooves (not shown) as those formed in the runner stone 21 are formed in a surface thereof which faces the runner stone 21.

As shown in Fig. 1, the bed stone 22 is connected to a drive shaft 51 of a motor 5, and when the motor 5 is driven, the drive shaft 51 rotates and the bed stone 22 is thereby rotated around the central axis. The runner stone 21 is supported by the drive shaft 51 and a not-shown supporting member, and by providing a bearing or the like between the runner stone 21 and the drive shaft 51, the runner stone 21 is not rotated even when the motor 5 is driven. Alternatively, there may be another configuration where the runner stone 21 is not supported by the drive shaft 51 and supported only by the not-shown supporting member so that the runner stone 21 may not be rotated.

As shown in Fig. 1, the feeder 3 includes a hopper 31 from which the softened rice is inputted therein, a first feed pipe 32 for feeding the rice inputted from the hopper 31 to the mill 2, and a raw material feed screw 33 extending horizontally in the first feed pipe 32. The raw material feed screw 33 rotates around its axis when a motor 34 is driven. The feeder 3 further includes a reservoir tank 35 for pooling the dispersion medium, a second feed pipe 36 for feeding the dispersion medium to the mill 2, and a liquid feed pump 37 for sending the dispersion medium out from the reservoir tank 35 into the second feed pipe 36.

In the grinding apparatus 1 having the above-described configuration, the rice inputted from the hopper 31 is moved in the first feed pipe 32 by the raw material feed screw 33 which is rotated by the motor 34 and then fed between the runner stone 21 and the bed stone 22 which is rotated by the motor 5 through the through hole 211. At the same time, the dispersion medium is sent to the second feed pipe 36 from the reservoir tank 35 by the liquid feed pump 37 and then fed between the runner stone 21 and the bed stone 22 through the through hole 211. The rice is thereby wet-ground, to thereby produce the rice slurry S. The rotation speed of the bed stone 22 at that time can be determined as appropriate, and may range from 20 rpm to 50 rpm or range from 1000 rpm to 2000 rpm.

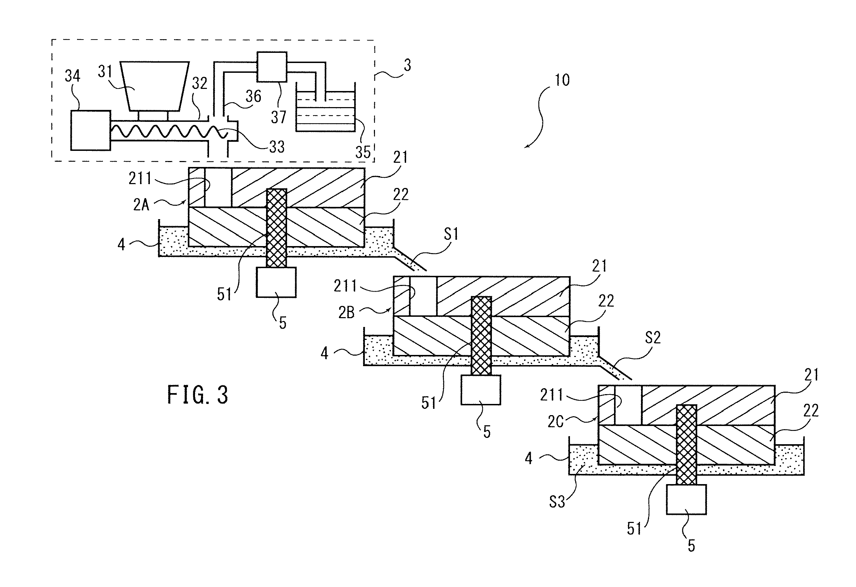

The above-described wet grinding can be performed a plurality of times in terms of refining of the rice particles. In such a case, as shown in Fig. 3, a grinding apparatus 10 including a first mill 2A, a second mill 2B, and a third mill 2C may be used.

In the grinding apparatus 10, first, the rice is wet-ground by the first mill 2A, to thereby produce first rice slurry S1, like in the grinding apparatus 1. Next, the first rice slurry S1 is inputted to the second mill 2B and then wet-ground by the second mill 2B, to thereby produce second rice slurry S2. Finally, the second rice slurry S2 is inputted to the third mill 2C and then wet-ground by the third mill 2C, to thereby produce third rice slurry S3 as an end product. In the wet grinding by the second and third mills 2B and 2C, more dispersion medium is not inputted. Thus, by performing wet grinding a plurality of times, the rice particles contained in the rice slurry can be refined.

The first to third mills 2A to 2C may be the same as one another but may be different from one another in the number or the depth of main grooves and sub-grooves formed in the runner stones 21 and the bed stones 22. For example, in the order of the first mill 2A, the second mill 2B, and the third mill 2C, the main grooves and the sub-grooves may be made deeper or the number of main grooves and sub-grooves may decrease.

Though the clearance between the runner stone 21 and the bed stone 22 in each of the first mill 2A, the second mill 2B, and the third mill 2C is not particularly limited, it is preferable that that of the second mill 2B should be smaller than that of the first mill 2A and that of the third mill 2C should be smaller than that of the second mill 2B.

In the grinding apparatus 10, there may be another configuration where the third mill 2C is omitted and the wet grinding is performed twice, or still another configuration where one or more mills are added and the wet grinding is performed four times or more.

Instead of the above-described grinding apparatus 1 or 10, a commercially-available grinding apparatus may be used. For example, Supermasscolloider (electric millstone) made by Masuko Sangyo Co., Ltd. with a grindstone of model number "MK-E 46 Standard" or "MK-GA 120 Standard" may be used to perform wet grinding at a rotation speed ranging from 1000 rpm to 2000 rpm. When the grinding apparatus with high rotation speed is used, the production efficiency of the rice slurry can be improved. Further, even when the commercially-available grinding apparatus is used, the wet grinding can be performed twice or more.

By using the rice slurry produced by the above-described grinding apparatus, the processed food in accordance with the present embodiment is manufactured. Herein, description will be made on a method of manufacturing pudding (rice pudding) using the rice slurry. Table 2 shows exemplary compounding ratio and component ratio of raw materials for the rice pudding in accordance with the present embodiment.

**[Table 2]**

| Raw Material Name | | | Compounding Ratio |
|---|---|---|---|
| Rice Slurry (Solid Content Concentration of Rice in Rice Slurry: 23.6 wt%) | | | 20.0 |
| Cream | | | 14.0 |
| Sugar | | | 10.0 |
| Whey Protein Isolate (WPI) | | | 2.0 |
| Skim Milk Powder | | | 5.6 |
| Dextrin | | | 1.8 |
| Raw Material Water | | | 46.6 |
| Total | | | 100.0 |
| | Component Ratio | Solids Not Fat (SNF) | 6 |
| | | Milk Fat (MFAT) | 6 |
| | | Rice Solids | 5 |
| | | Total Solids | 30 |
| | | | (wt%) |

In the present embodiment, in order to coagulate the rice pudding, whey protein isolate (WPI) is used. Egg may be used instead of the WPI, but it is preferable to use the WPI since the WPI can accentuate the flavor of rice. Further, by the synergistic effect of the WPI and the rice slurry, unique texture having viscoelasticity (glutinous texture) can also be achieved. Cream may be appropriately selected, and for example, cream having milk fat of about 30 to 50 % may be used. The compounding ratio and the component ratio of the raw materials for the rice pudding are not limited to those shown in Table 2 but may be changed as appropriate if needed.

Hereinafter, description will be made on methods of manufacturing the rice pudding in both cases where the rice pudding is oven-baked and where the rice pudding is retorted.

### (For Oven-Baked Rice Pudding)

In a case where rice pudding is produced by oven-baking, a mixed solution in which the raw materials shown in Table 2 other than the WPI are mixed is produced and the mixed solution is homogenized by using a homogenizer as necessary. Further, before mixing the rice slurry with the other raw materials, heat sterilization and/or homogenization of the rice slurry may be performed. Subsequently, ultra-high temperature instantaneous sterilization (UHT) of the mixed solution is performed, for example, at a temperature of 130 °C for two seconds. After that, a rice pudding stock solution is produced by adding a WPI solution to the mixed solution and a suitable container is filled with the rice pudding stock solution.

The container filled with the rice pudding stock solution is put into an oven and baking is performed, for example, at a temperature ranging from 150 to 160 °C for 30 to 60 minutes. At that time, double-boil may be performed as necessary. The rice pudding stock solution in the container is thereby coagulated. The oven may be preheated, and the baking temperature and the baking time in the oven may be controlled as appropriate.

Finally, after the container with the rice pudding after being oven-baked is cooled in ice water, a refrigerator, a freezer, or the like, the container is sealed and refrigerated. The oven-baked rice pudding in accordance with the present embodiment is thereby completed.

### (For Retorted Rice Pudding)

In a case where rice pudding is produced by retorting, a rice pudding stock solution is produced by mixing all the raw materials shown in Table 2 and the rice pudding stock solution is homogenized as necessary. Further, before mixing the rice slurry with the other raw materials, heat sterilization and/or homogenization of the rice slurry may be performed. Subsequently, a suitable container is filled with the rice pudding stock solution and then sealed.

The rice pudding stock solution filling the container is retorted by a well-known method, for example, at a temperature of 105 °C for 30 minutes. The rice pudding stock solution in the container is thereby coagulated. The heating temperature and the heating time in the retorting may be controlled as appropriate.

Finally, after the container with the rice pudding after being retorted is cooled in ice water, a refrigerator, a freezer, or the like, and then refrigerated. The retorted rice pudding in accordance with the present embodiment is thereby completed.

Thus, since the processed food in accordance with the present embodiment contains rice, it is possible to accelerate consumption of rice by this processed food. Further, this processed food, which contains rice, can achieve flavor and texture unique to rice.

While the embodiment has been shown and described, the present invention is not limited to the above-described embodiment, and numerous modifications and variations can be devised without departing from the scope of the invention.

Though the pudding (rice pudding) using the rice slurry has been described in the above-described embodiment, rice flour, glutinous rice flour, or top-grade rice flour may be used instead of the rice slurry. In such a case, the compounding ratio and the component ratio of the raw materials may be adjusted as appropriate. Since the rice slurry usually has a particle diameter smaller than that of rice flour and that of glutinous rice flour and also has excellent dispersibility, however, it is preferable to use the rice slurry in terms of processing suitability.

Further, for a dairy product-like processed food other than rice pudding, the rice slurry, rice flour, glutinous rice flour, or top-grade rice flour may be used.

### Examples

Hereinafter, in several Examples, the present invention will be described in more detail. The present invention, however, is not limited to the following Examples.

### (Example 1)

### (Production of Rice Slurry)

First, sample rice (brand: Hokuriku 193, unpolished rice) is immersed in distilled water of 5 °C for about 12 hours (one night). Next, by using the grinding apparatus 10 shown in Fig. 2, while water is added so that ratio of the distilled water to the rice by weight may be about eight times, wet grinding of the rice after being immersed is repeated three times, to thereby prepare the rice slurry. Under the same conditions, two rice slurry samples are prepared.

### (Comparative Examples 1-1 to 1-3)

In order to compare with the rice slurry in Example 1, respective 10 wt% aqueous solutions of rice flour (made by Namisato Corporation), glutinous rice flour (made by Wataei Shoten), and top-grade rice flour (made by Kadoya) are prepared. It is assumed that the 10 wt% aqueous solution of rice flour is Comparative Example 1-1, the 10 wt% aqueous solution of glutinous rice flour is Comparative Example 1-2, and the 10 wt% aqueous solution of top-grade rice flour is Comparative Example 1-3.

### (Evaluation)

By using a laser diffraction particle size analyzer (SALD-2200 made by Shimadzu Corporation), the median diameter of rice particle contained in the rice slurry in Example 1 is measured. Further, the respective median diameters of rice particles contained in the 10 wt% aqueous solution of rice flour in Comparative Example 1-1, the 10 wt% aqueous solution of glutinous rice flour in Comparative Example 1-2, and the 10 wt% aqueous solution of top-grade rice flour in Comparative Example 1-3 are also measured. The respective median diameters of rice particles in Example 1 and Comparative Examples 1-1 to 1-3 are shown in Table 3. The respective pHs in Example 1 and Comparative Examples 1-1 to 1-3 are also shown in Table 3.

**[Table 3]**

| | Rice Slurry <Example 1> | | 10 wt% Aqueous Solution of Rice Flour (made by Namisato Corporation) < Comparative Example 1-1> | 10 wt% Aqueous Solution of Glutinous Rice Flour (made by Wataei Shoten) < Comparative Example 1-2> | 10 wt% Aqueous Solution of Top-Grade Rice Flour (made by Kadoya) < Comparative Example 1-3> |
|---|---|---|---|---|---|
| Type of Raw Material | Non-Glutinous Rice 100% | | Non-Glutinous Rice 100% | Glutinous Rice 100% | Non-Glutinous Rice 100% |
| pH | 6.94 | | 7.12 | 6.33 | 6.56 |
| Median Diameter (µm) | Sample 1 | Sample 2 | 55.3 | 77.6 | 184.3 |
| | 8.48 | 8.35 | | | |
| | Average: 8.41 | | | | |

As shown in Table 3, the rice slurry of Example 1 has a median diameter of rice particle is not higher than 10µm and the median diameter of rice particle is very small as compared with those of the respective 10 wt% aqueous solutions of rice flour, glutinous rice flour, and top-grade rice flour. It is found from this fact that the rice slurry has more excellent dispersibility and processing suitability than those of rice flour, glutinous rice flour, and top-grade rice flour.

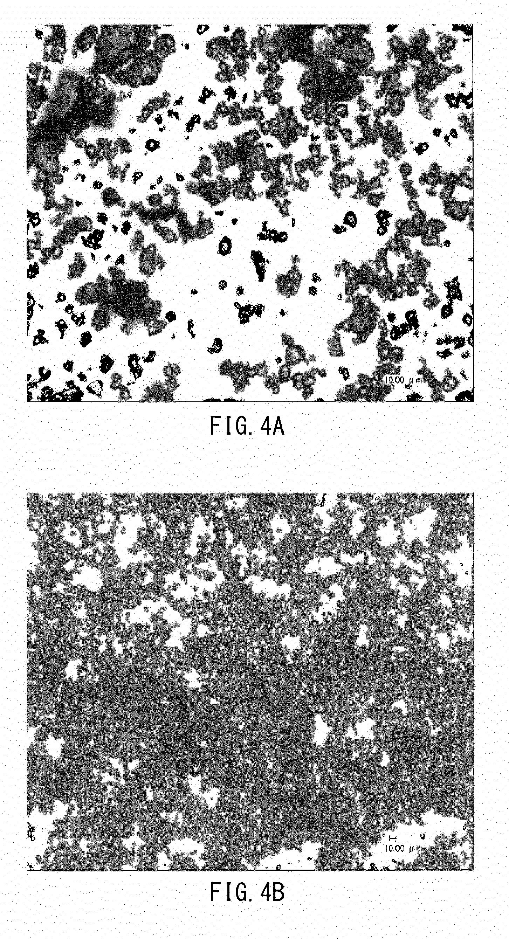

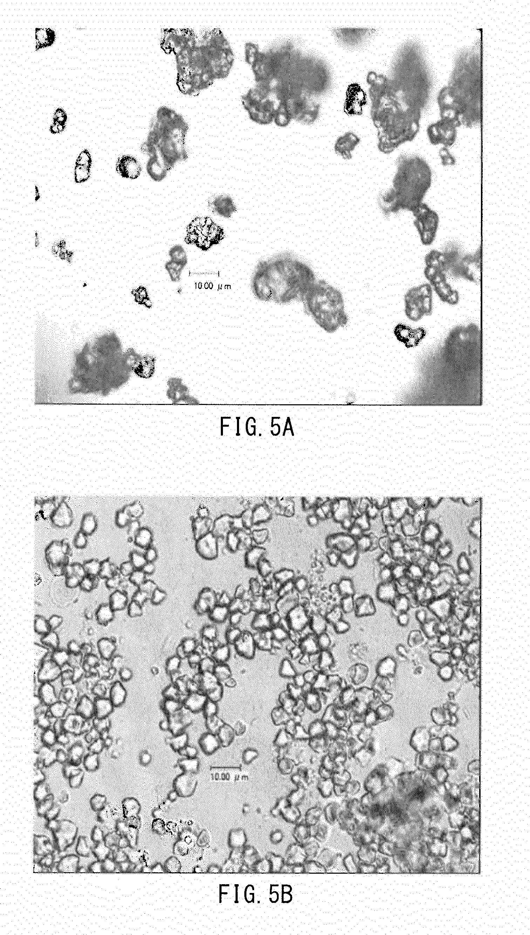

Further, the rice slurry in Example 1 and the 10 wt% aqueous solution of rice flour in Comparative Example 1-1 are observed by using a digital microscope. Respective digital microscope images of the 10 wt% aqueous solution of rice flour in Comparative Example 1-1 and the rice slurry in Example 1 (magnifications: 450 times and 2000 times) are shown in Figs. 4A, 4B, 5A, and 5B. It can be seen from these figures that the diameters of particles of rice are uniform in the rice slurry in Example 1 while rice particles of various sizes mixedly exist and the diameters of particles of rice are not uniform in the 10 wt% aqueous solution of rice flour in Comparative Example 1-1. Further, it can be also seen from Figs. 5A and 5B that the shape of rice particle is angulate in the rice slurry in Example 1 while the shape of rice particle is rounded in the 10 wt% aqueous solution of rice flour in Comparative Example 1-1.

The solid content concentration of rice in the rice slurry in Example 1, which is measured by the dry weight method, is 9.8 wt%. Further, the rice slurry in Example 1 has more GABA and high nutritional value since the unpolished rice is used.

### (Production of Rice Pudding Not Containing Egg)

### (Example 2-1)

By the following procedure, rice pudding in accordance with Example 2-1 is produced.

First, by mixing the rice slurry in Example 1 with cream, sugar, whey protein isolate (WPI), skim milk powder, dextrin, and raw material water, a rice pudding stock solution is obtained. The compounding ratio of the raw materials is, as shown in Table 4, the rice slurry of 20.0 wt%, cream (fresh cream (milk fat: 4.7 wt%)) made by Meiji Co., Ltd.) of 12.0 wt%, sugar of 10.0 wt%, WPI of 3.0 wt%, skim milk powder of 6.0 wt%, dextrin of 4.1 wt%, and raw material water (distilled water) of 44.9 wt%. The solid content concentration of rice in the rice pudding stock solution is 2 wt%.

Next, the rice pudding stock solution is heated to 60 °C and a container is filled with the rice pudding stock solution. After that, the container with its upper surface covered with aluminum foil is double-boiled in an oven with its upper stage of 150 °C and its lower stage of 160 °C for 50 minutes, and rice pudding in accordance with Example 2-1 is thereby obtained. Further, eight samples (weight after the double-boil: each 130 g) are put into the oven once.

### (Example 2-2)

Though rice pudding in accordance with Example 2-2 is different in the compounding ratio of the raw materials from the rice pudding in Example 2-1, the number of samples and the manufacturing procedure are the same as those of the rice pudding in Example 2-1. The compounding ratio of the raw materials for the rice pudding in Example 2-2 is, as shown in Table 4, the rice slurry of 40.0 wt%, the same cream as that in Example 2-1 of 12.0 wt%, sugar of 10.0 wt%, WPI of 2.5 wt%, skim milk powder of 6.0 wt%, dextrin of 2.5 wt%, and raw material water (distilled water) of 27.0 wt%. The solid content concentration of rice in the rice pudding stock solution in Example 2-2 is 4 wt%.

### (Example 2-3)

Though rice pudding in accordance with Example 2-3 is different in the compounding ratio of the raw materials from the rice pudding in Example 2-1, the number of samples and the manufacturing procedure are the same as those of the rice pudding in Example 2-1. The compounding ratio of the raw materials for the rice pudding in Example 2-3 is, as shown in Table 4, the rice slurry of 70.0 wt%, the same cream as that in Example 2-1 of 12.0 wt%, sugar of 10.0 wt%, WPI of 2.0 wt%, and skim milk powder of 6.0 wt%. The solid content concentration of rice in the rice pudding stock solution in Example 2-3 is 7 wt%.

### (Comparative Example 2)

As to pudding in accordance with Comparative Example 2, though the number of samples and the manufacturing procedure are the same as those of the rice pudding in Example 2-1, the rice slurry is not used as the raw material. The compounding ratio of the raw materials for the pudding in Comparative Example 2 is, as shown in Table 4, the same cream as that in Example 2-1 of 12.0 wt%, sugar of 10.0 wt%, WPI of 3.3 wt%, skim milk powder of 6.0 wt%, dextrin of 5.8 wt%, and raw material water (distilled water) of 62.9 wt%.

**[Table 4]**

| | | | Compounding Ratio | | | |
|---|---|---|---|---|---|---|
| Raw Material Name | | | Example 2-1 | Example 2-2 | Example 2-3 | Comparative Example 2 |
| Rice Slurry | | | 20.0 | 40.0 | 70.0 | 0.0 |
| Cream | | | 12.0 | 12.0 | 12.0 | 12.0 |
| Sugar | | | 10.0 | 10.0 | 10.0 | 10.0 |
| Whey Protein Isolate (WPI) | | | 3.0 | 2.5 | 2.0 | 3.3 |
| Skim Milk Powder | | | 6.0 | 6.0 | 6.0 | 6.0 |
| Dextrin | | | 4.1 | 2.5 | 0.0 | 5.8 |
| Raw Material Water | | | 44.9 | 27.0 | 0.0 | 62.9 |
| Total | | | 100.0 | 100.0 | 100.0 | 100.0 |
| | Component Ratio | Solids Not Fat (SNF) | 6 | 6 | 6 | 6 |
| | | Milk Fat (MFAT) | 6 | 6 | 6 | 6 |
| | | Rice Solids | 2 | 4 | 7 | 0 |
| | | Total Solids | 31 | 31 | 31 | 31 |
| | | | | | | (wt%) |

### (Evaluation)

### (Sensory Evaluation)

Sensory evaluation of the rice puddings in Examples 2-1 to 2-3 and the pudding in Comparative Example 2 is performed by ranking. Specifically, as to the rice puddings in Examples 2-1 to 2-3 and the pudding in Comparative Example 2, two items of the intensity of rice flavor and the strength of viscoelasticity (glutinous texture) are evaluated by ten members of the panel in descending order of the intensity of rice flavor and the strength of viscoelasticity. Then, with respect to each of the rice puddings in Examples 2-1 to 2-3 and the pudding in Comparative Example 2, the total of ranks for each item and the difference between the totals of ranks are calculated. With respect to the intensity of rice flavor and the strength of viscoelasticity, the ranks evaluated by the members of the panel, the totals of ranks, and the difference between the totals of ranks are shown in Tables 5 and 6, respectively. With respect to the intensity of rice flavor and the strength of viscoelasticity, in descending order of the total of ranks, placed are Comparative Example 2, Example 2-1, Example 2-2, and then Example 2-3.

**[Table 5]**

| (1) Intensity of Rice Flavor | | | | |
|---|---|---|---|---|
| | Comparative Example 2 | Example 2-1 | Example 2-2 | Example 2-3 |
| Solid Content Concentration of Rice (wt%) | 0 | 2 | 4 | 7 |
| Panel No. | Ranking | | | |
| No. 1 | 3 | 2 | 1 | 4 |
| No. 2 | 4 | 3 | 2 | 1 |
| No. 3 | 4 | 3 | 2 | 1 |
| No. 4 | 4 | 3 | 1 | 2 |
| No. 5 | 4 | 3 | 2 | 1 |
| No. 6 | 4 | 2 | 3 | 1 |
| No. 7 | 3 | 4 | 1 | 2 |
| No. 8 | 4 | 3 | 2 | 1 |
| No. 9 | 4 | 3 | 2 | 1 |
| No. 10 | 4 | 3 | 2 | 1 |
| | S-1 | S-2 | S-3 | S-4 |
| Total of Ranks | 38 | 29 | 18 | 15 |
| Difference from S-1 | 0 | -9 | -20 | -23 |
| Difference from S-2 | 9 | 0 | -11 | -14 |
| Difference from S-3 | 20 | 11 | 0 | -3 |
| Difference from S-4 | 23 | 14 | 3 | 0 |

| | | | | |
|---|---|---|---|---|
| Significant Difference: Comparative Example 2 ≦Example 2-1 < Example 2-2 ≦ Example 2-3 ("<" means that there is a significant difference, "≦" means that there is no significant difference) | | | | |

**[Table 6]**

| (2) Strength of Viscoelasticity | | | | |
|---|---|---|---|---|
| | Comparative Example 2 | Example 2-1 | Example 2-2 | Example 2-3 |
| Solid Content Concentration of Rice (wt%) | 0 | 2 | 4 | 7 |
| Panel No. | Ranking | | | |
| No. 1 | 3 | 4 | 2 | 1 |
| No. 2 | 4 | 3 | 2 | 1 |
| No. 3 | 3 | 4 | 2 | 1 |
| No. 4 | 4 | 3 | 2 | 1 |
| No. 5 | 4 | 3 | 2 | 1 |
| No. 6 | 4 | 3 | 2 | 1 |
| No. 7 | 4 | 3 | 2 | 1 |
| No. 8 | 4 | 3 | 2 | 1 |
| No. 9 | 4 | 3 | 2 | 1 |
| No. 10 | 4 | 3 | 2 | 1 |
| | S-1 | S-2 | S-3 | S-4 |
| Total of Ranks | 38 | 32 | 20 | 10 |
| Difference from S-1 | 0 | -6 | -18 | -28 |
| Difference from S-2 | 6 | 0 | -12 | -22 |
| Difference from S-3 | 18 | 12 | 0 | -10 |
| Difference from S-4 | 28 | 22 | 10 | 0 |

| | | | | |
|---|---|---|---|---|
| Significant Difference: Comparative Example 2 ≦Example 2-1 < Example 2-2 ≦ Example 2-3 ("<" means that there is a significant difference, "≦" means that there is no significant difference) | | | | |

### (Intensity of Rice Flavor)

If the absolute value of the difference in the total of ranks is not smaller than 15, it is determined that there is a significant difference. Specifically, as shown in Fig. 5, as to the intensity of rice flavor, since the absolute value of the difference in the total of ranks between Comparative Example 2 and Example 2-1 is 9, there is no significant difference between Comparative Example 2 and Example 2-1. Further, since the absolute value of the difference in the total of ranks between Example 2-1 and Example 2-2 is 11, there is no significant difference between Example 2-1 and Example 2-2. Furthermore, since the absolute value of the difference in the total of ranks between Example 2-2 and Example 2-3 is 3, there is no significant difference between Example 2-2 and Example 2-3. Since the absolute value of the difference in the total of ranks between Comparative Example 2 and Example 2-2 is 20, however, there is a significant difference between Comparative Example 2 and Example 2-2. It is found from this result that rice pudding not containing egg can surely and reliably have rice flavor when the solid content concentration of rice is not lower than 2.5 wt% and not higher than 10 wt%, preferably when the solid content concentration of rice is not lower than 3 wt% and not higher than 9 wt%, more preferably when the solid content concentration of rice is not lower than 3.5 wt% and not higher than 8 wt%, and further preferably when the solid content concentration of rice is not lower than 4 wt% and not higher than 7 wt%.

### (Strength of Viscoelasticity)

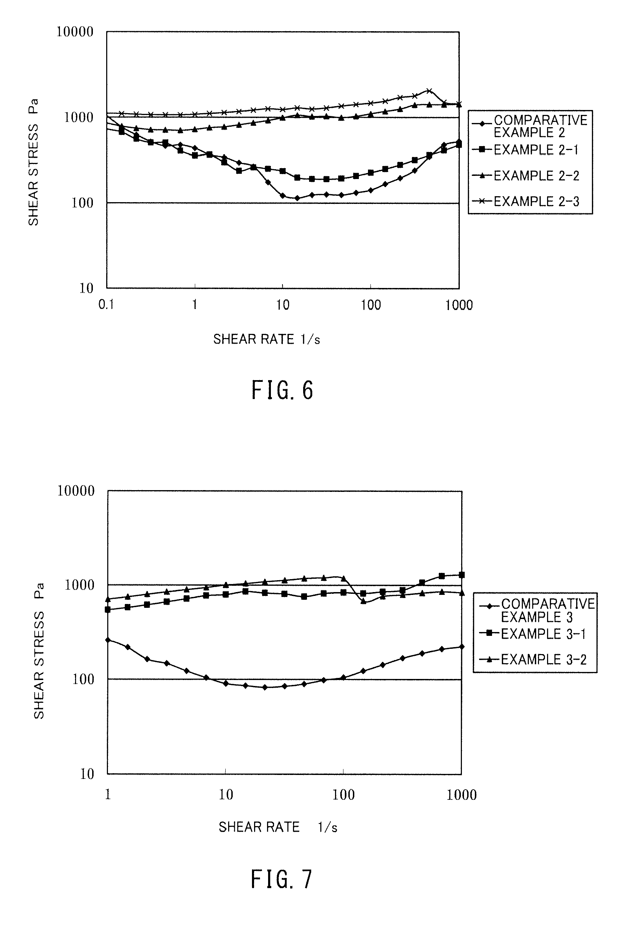

As shown in Fig. 6, as to the strength of viscoelasticity, since the absolute value of the difference in the total of ranks between Comparative Example 2 and Example 2-1 is 6, there is no significant difference between Comparative Example 2 and Example 2-1. Further, since the absolute value of the difference in the total of ranks between Example 2-1 and Example 2-2 is 12, there is no significant difference between Example 2-1 and Example 2-2. Furthermore, since the absolute value of the difference in the total of ranks between Example 2-2 and Example 2-3 is 10, there is no significant difference between Example 2-2 and Example 2-3. Since the absolute value of the difference in the total of ranks between Comparative Example 2 and Example 2-2 is 18, however, there is a significant difference between Comparative Example 2 and Example 2-2. It is found from this result that rice pudding not containing egg not only can surely and reliably have rice flavor but also can reliably have texture of strong viscoelasticity (glutinous texture) when the solid content concentration of rice is not lower than 2.5 wt% and not higher than 10 wt%, preferably when the solid content concentration of rice is not lower than 3 wt% and not higher than 9 wt%, more preferably when the solid content concentration of rice is not lower than 3.5 wt% and not higher than 8 wt%, and further preferably when the solid content concentration of rice is not lower than 4 wt% and not higher than 7 wt%.

### (Measurement of Shear Stress)

By using an MCR rheometer (MCR-301 made by Anton Paar GmbH) (a viscoelasticity measuring apparatus), respective shear stresses of the rice puddings of Examples 2-1 to 2-3 and the pudding of Comparative Example 2 are measured at a shear rate of 0.1 to 1000 (1/s) and a temperature of 20 °C. As shown in Fig. 6, the respective shear stresses of the rice puddings of Examples 2-2 and 2-3 are higher than those of the rice pudding of Example 2-1 and the pudding of Comparative Example 2 especially at a shear rate of 10 to 100 (1/s). For example, at a shear rate of 100 (1/s), while the shear stress of the pudding of Comparative Example 2 is 142 Pa, the shear stresses of the rice puddings of Examples 2-1 to 2-3 are 227 Pa, 1105 Pa, and 1474 Pa, respectively. It is found also from this result that rice pudding not containing egg can have texture of strong viscoelasticity (glutinous texture) when the solid content concentration of rice is not lower than 2.5 wt% and not higher than 10 wt%, preferably when the solid content concentration of rice is not lower than 3 wt% and not higher than 9 wt%, more preferably when the solid content concentration of rice is not lower than 3.5 wt% and not higher than 8 wt%, and further preferably when the solid content concentration of rice is not lower than 4 wt% and not higher than 7 wt%. Then, it is found that for rice pudding not containing egg, at a shear rate of 100 (1/s), the shear stress (temperature: 20 °C) should be not lower than 200 Pa and not higher than 10000 Pa, and it is preferable that the shear stress should be not lower than 300 Pa and not higher than 5000 Pa, more preferable that the shear stress should be not lower than 500 Pa and not higher than 3000 Pa, further preferable that the shear stress should be not lower than 800 Pa and not higher than 2000 Pa, and particularly preferable that the shear stress should be not lower than 1000 Pa and not higher than 1500 Pa.

### (Measurement of Breaking Strength and Breaking Strain)

By using a Creep Meter (RHEONER II made by Yamaden Co., Ltd,), respective breaking strengths and breaking strains of the rice puddings of Examples 2-1 to 2-3 and the pudding of Comparative Example 2 are measured three times and the average values are calculated. Table 7 shows the calculation result of the average values. As shown in Table 7, while the average value of the breaking strain of the pudding of Comparative Example 2 is over 45 %, the respective average values of the breaking strains of the rice puddings of Examples 2-1 to 2-3 fall into a range from 10 % to 45 % and the respective average values of the breaking strains of the rice puddings of Examples 2-2 and 2-3 fall into a range from 15 % to 35 %. It is found from this result that in a case of rice pudding not containing egg, the breaking strain decreases as the solid content concentration of rice increases.

**[Table 7]**

| | Breaking Strength (g/cm²) [Average Value] | Breaking Strain (%) [Average Value] |
|---|---|---|
| Comparative Example 2 | 65.7 | 47.3 |
| Example 2-1 | 67.0 | 42.1 |
| Example 2-2 | 66.0 | 27.1 |
| Example 2-3 | 152.9 | 18.6 |

### (Production of Rice Pudding Containing Egg)

### (Example 3-1)

By the following procedure, rice pudding in accordance with Example 3-1 is produced. The rice pudding in accordance with Example 3-1 is different from those in Examples 2-1 to 2-3 and contains egg.

First, by mixing the rice slurry in Example 1 with whole egg liquid, cream, sugar, skim milk powder, and raw material water, a rice pudding stock solution is obtained. The compounding ratio of the raw materials is, as shown in Table 8, the rice slurry of 20.0 wt%, whole egg liquid of 20.0 wt%, cream (fresh cream "Ajiwai" (milk fat: 4.0 wt%)) made by Meiji Co., Ltd.) of 8.0 wt%, sugar of 12.0 wt%, skim milk powder (made by Meiji Co., Ltd.) of 5.0 wt%, and raw material water (distilled water) of 35.0 wt%. The solid content concentration of rice in the rice pudding stock solution is 2 wt%.

Next, the rice pudding stock solution is heated to 50 °C and a container is filled with the rice pudding stock solution. After that, the container is baked in an oven with its upper stage of 130 °C and its lower stage of 140 °C for 45 minutes and rice pudding in accordance with Example 3-1 is thereby obtained. Further, eight samples (weight after the baking: each 120 g) are put into the oven once.

### (Example 3-2)

Though rice pudding in accordance with Example 3-2 is different in the compounding ratio of the raw materials from the rice pudding in Example 3-1, the number of samples and the manufacturing procedure are the same as those of the rice pudding in Example 3-1. The compounding ratio of the raw materials for the rice pudding in Example 3-2 is, as shown in Table 8, the rice slurry of 40.0 wt%, the whole egg liquid of 20.0 wt%, the same cream as that in Example 3-1 of 8.0 wt%, sugar of 12.0 wt%, the same skim milk powder as that in Example 3-1 of 3.0 wt%, and raw material water (distilled water) of 17.0 wt%. The solid content concentration of rice in the rice pudding stock solution is 4 wt%.

### (Comparative Example 3)

As to pudding in accordance with Comparative Example 3, though the number of samples and the manufacturing procedure are the same as those of the rice pudding in Example 3-1, the rice slurry is not used as the raw material. The compounding ratio of the raw materials for the pudding in Comparative Example 3 is, as shown in Table 8, the whole egg liquid of 20.0 wt%, the same cream as that in Example 3-1 of 8.0 wt%, sugar of 12.0 wt%, the same skim milk powder as that in Example 3-1 of 7.4 wt%, and raw material water (distilled water) of 52.6 wt%.

**[Table 8]**

| | | | Compounding Ratio | | |
|---|---|---|---|---|---|
| Raw Material Name | | | Example 3-1 | Example 3-2 | Comparative Example 3 |
| Rice Slurry | | | 20.0 | 40.0 | 0.0 |
| Whole Egg Liquid | | | 20.0 | 20.0 | 20.0 |
| Cream | | | 8.0 | 8.0 | 8.0 |
| Sugar | | | 12.0 | 12.0 | 12.0 |
| Skim Milk Powder | | | 5.0 | 3.0 | 7.4 |
| Raw Material Water | | | 35.0 | 17.0 | 52.6 |
| Total | | | 100.0 | 100.0 | 100.0 |
| | Component Ratio | Solids Not Fat (SNF) | 5 | 3 | 8 |
| | | Milk Fat (MFAT) | 3 | 3 | 3 |
| | | Rice Solids | 2 | 4 | 0 |
| | | Total Solids | 33 | 33 | 33 |
| | | | | | (wt%) |

### (Evaluation)

### (Sensory Evaluation)

Sensory evaluation of the rice puddings in Examples 3-1 and 3-2 and the pudding in Comparative Example 3 is performed by four members of the panel, and it is evaluated that the rice puddings in Examples 3-1 and 3-2 have viscoelastic texture (glutinous texture). It is found from this result that rice pudding containing egg can have texture of strong viscoelasticity when the solid content concentration of rice is not lower than 1 wt% and not higher than 7 wt%, preferably when the solid content concentration of rice is not lower than 1.5 wt% and not higher than 6 wt%, more preferably when the solid content concentration of rice is not lower than 1.5 wt% and not higher than 5 wt%, and further preferably when the solid content concentration of rice is not lower than 2 wt% and not higher than 4 wt%.

### (Measurement of Shear Stress)

By using the MCR rheometer (MCR-301 made by Anton Paar GmbH) (the viscoelasticity measuring apparatus), respective shear stresses of the rice puddings of Examples 3-1 and 3-2 and the pudding of Comparative Example 3 are measured at a shear rate of 0.1 to 1000 (1/s) and a temperature of 20 °C. As shown in Fig. 7, the respective shear stresses of the rice puddings of Examples 3-1 and 3-2 are higher than that of the pudding of Comparative Example 3. For example, at a shear rate of 100 (1/s), while the shear stress of the pudding of Comparative Example 3 is 105 Pa, the shear stresses of the rice puddings of Examples 3-1 and 3-2 are 836 Pa and 1176 Pa, respectively. It is found also from this result that rice pudding containing egg can have texture of strong viscoelasticity (glutinous texture) when the solid content concentration of rice is not lower than 1 wt% and not higher than 7 wt%, preferably when the solid content concentration of rice is not lower than 1.5 wt% and not higher than 6 wt%, more preferably when the solid content concentration of rice is not lower than 1.5 wt% and not higher than 5 wt%, and further preferably when the solid content concentration of rice is not lower than 2 wt% and not higher than 4 wt%. Then, it is found that for rice pudding containing egg, at a shear rate of 100 (1/s), the shear stress (temperature: 20 °C) should be not lower than 200 Pa and not higher than 10000 Pa, and it is preferable that the shear stress should be not lower than 300 Pa and not higher than 5000 Pa, more preferable that the shear stress should be not lower than 500 Pa and not higher than 3000 Pa, further preferable that the shear stress should be not lower than 800 Pa and not higher than 2000 Pa, and particularly preferable that the shear stress should be not lower than 1000 Pa and not higher than 1500 Pa.

### (Example 4-1)

By the following procedure, rice pudding in accordance with Example 4-1 is produced. The rice pudding in accordance with Example 4-1 contains egg, like those in Examples 3-1 and 3-2.

First, by mixing the rice slurry in Example 1 with whole egg liquid, sugar, and milk, a rice pudding stock solution is obtained. The compounding ratio of the raw materials is, as shown in Table 9, the rice slurry of 25.0 wt%, whole egg liquid of 20.0 wt%, sugar of 12.0 wt%, and milk of 43.0 wt%. The solid content concentration of rice in the rice pudding stock solution is 3 wt%.

Next, the rice pudding stock solution is heated to 50 °C and a container is filled with the rice pudding stock solution. Subsequently, the container is double-boiled in an oven at a temperature of 160 °C for 40 minutes and then left in the oven for 5 minutes, and rice pudding in accordance with Example 4-1 is thereby obtained. Further, four samples are put into the oven once.

### (Example 4-2)

Though rice pudding in accordance with Example 4-2 is different in the compounding ratio of the raw materials from the rice pudding in Example 4-1, the number of samples and the manufacturing procedure are the same as those of the rice pudding in Example 4-1. The compounding ratio of the raw materials for the rice pudding in Example 4-2 is, as shown in Table 9, the rice slurry of 50.0 wt%, the whole egg liquid of 20.0 wt%, sugar of 12.0 wt%, and milk of 18.0 wt%. The solid content concentration of rice in the rice pudding stock solution is 5 wt%.

### (Comparative Example 4)

As to pudding in accordance with Comparative Example 4, though the number of samples and the manufacturing procedure are the same as those of the rice pudding in Example 4-1, the rice slurry is not used as the raw material. The compounding ratio of the raw materials for the pudding in Comparative Example 4 is, as shown in Table 9, the whole egg liquid of 20.0 wt%, sugar of 12.0 wt%, and milk of 68.0 wt%.

**[Table 9]**

| | Compounding Ratio | | |
|---|---|---|---|
| Raw Material Name | Example 4-1 | Example 4-2 | Comparative Example 4 |
| Rice Slurry | 25.0 | 50.0 | 0.0 |
| Whole Egg Liquid | 20.0 | 20.0 | 20.0 |
| Sugar | 12.0 | 12.0 | 12.0 |
| Milk | 43.0 | 18.0 | 68.0 |
| Total | 100.0 | 100.0 | 100.0 |
| Rice Solids | 3 | 5 | 0 |
| | | | (wt%) |

### (Evaluation)

### (Measurement of Breaking Strength and Breaking Strain)

By using the Creep Meter (RHEONER II made by Yamaden Co., Ltd,), respective breaking strengths and breaking strains of the rice puddings of Examples 4-1 and 4-2 and the pudding of Comparative Example 4 are measured twice and the average values are calculated. Table 10 shows the calculation result of the average values. As shown in Table 10, while the average value of the breaking strength of the pudding of Comparative Example 4 is over 45 g/cm², the respective average values of the breaking strengths of the rice puddings of Examples 4-1 and 4-2 fall into a range from 10 g/cm² to 40 g/cm². It is found from this result that in a case of rice pudding containing egg, the breaking strength decreases as the solid content concentration of rice increases.

**[Table 10]**

| | Breaking Strength (g/cm²) [Average Value] | Breaking Strain (%) [Average Value] |
|---|---|---|
| Comparative Example 4 | 45.3 | 20.7 |
| Example 4-1 | 38.5 | 21.6 |
| Example 4-2 | 21.1 | 21.8 |

### (Production of Rice Fermented Milk)

### (Example 5-1)

After the rice slurry in Example 1 is heated at a temperature of 121 °C for one minute, lactic acid bacteria are added thereto and then the rice slurry is fermented at a temperature of 43 °C for 16 hours, and rice fermented milk in accordance with Example 5-1 is thereby produced. The compounding ratio between the rice slurry and the lactic acid bacteria is, as shown in Table 11, the rice slurry of 98.0 wt% and the lactic acid bacteria of 2.0 wt%.

### (Example 5-2)

After the rice slurry is heated, like in Example 5-1, the rice slurry is mixed with milk, and a raw material liquid of rice fermented milk is thereby obtained. By adding lactic acid bacteria to the raw material liquid of rice fermented milk and fermenting the raw material liquid under the same condition as that in Example 5-1, rice fermented milk in accordance with Example 5-2 is produced. The compounding ratio of the raw materials and the lactic acid bacteria is, as shown in Table 11, the rice slurry of 49.0 wt%, milk of 49.0 wt%, and the lactic acid bacteria of 2.0 wt%.

### (Example 5-3)

After the rice slurry is heated, like in Example 5-1, the rice slurry is mixed with common salt, and a raw material liquid of rice fermented milk is thereby obtained. By adding lactic acid bacteria to the raw material liquid of rice fermented milk and fermenting the raw material liquid under the same condition as that in Example 5-1, rice fermented milk in accordance with Example 5-3 is produced. The compounding ratio of the raw materials and the lactic acid bacteria is, as shown in Table 11, the rice slurry of 97.0 wt%, common salt of 1.0 wt%, and the lactic acid bacteria of 2.0 wt%.

### (Example 5-4)

After the rice slurry is heated, like in Example 5-1, the rice slurry is mixed with sugar, and a raw material liquid of rice fermented milk is thereby obtained. By adding lactic acid bacteria to the raw material liquid of rice fermented milk and fermenting the raw material liquid under the same condition as that in Example 5-1, rice fermented milk in accordance with Example 5-4 is produced. The compounding ratio of the raw materials and the lactic acid bacteria is, as shown in Table 11, the rice slurry of 93.0 wt%, sugar of 5.0 wt%, and the lactic acid bacteria of 2.0 wt%.

### (Example 5-5)

After the rice slurry is heated, like in Example 5-1, the rice slurry is mixed with milk and common salt, and a raw material liquid of rice fermented milk is thereby obtained. By adding lactic acid bacteria to the raw material liquid of rice fermented milk and fermenting the raw material liquid under the same condition as that in Example 5-1, rice fermented milk in accordance with Example 5-5 is produced. The compounding ratio of the raw materials and the lactic acid bacteria is, as shown in Table 11, the rice slurry of 48.5 wt%, milk of 48.5 wt%, common salt of 1.0 wt%, and the lactic acid bacteria of 2.0 wt%.

### (Example 5-6)

After the rice slurry is heated, like in Example 5-1, the rice slurry is mixed with milk and sugar, and a raw material liquid of rice fermented milk is thereby obtained. By adding lactic acid bacteria to the raw material liquid of rice fermented milk and fermenting the raw material liquid under the same condition as that in Example 5-1, rice fermented milk in accordance with Example 5-6 is produced. The compounding ratio of the raw materials and the lactic acid bacteria is, as shown in Table 11, the rice slurry of 46.5 wt%, milk of 46.5 wt%, sugar of 5.0 wt%, and the lactic acid bacteria of 2.0 wt%.

**[Table 11]**

| | Compounding Ratio (wt%) | | | | | |
|---|---|---|---|---|---|---|
| Raw Material Name | Example 5-1 | Example 5-2 | Example 5-3 | Example 5-4 | Example 5-5 | Example 5-6 |
| Rice Slurry | 98.0 | 49.0 | 97.0 | 93.0 | 48.5 | 46.5 |
| Milk | 0.0 | 49.0 | 0.0 | 0.0 | 48.5 | 46.5 |
| Common Salt | 0.0 | 0.0 | 1.0 | 0.0 | 1.0 | 0.0 |
| Sugar | 0.0 | 0.0 | 0.0 | 5.0 | 0.0 | 5.0 |
| Lactic Acid Bacteria Starter | 2.0 | 2.0 | 2.0 | 2.0 | 2.0 | 2.0 |
| Total | 100.0 | 100.0 | 100.0 | 100.0 | 100.0 | 100.0 |
| pH (After 16 Hours Fermentation) | 3.76 | 3.71 | 3.81 | 3.69 | 3.74 | 3.70 |

### (Evaluation)

Flavors of the rice fermented milks in Examples 5-1 to 5-6 are evaluated by four members of the panel, and it is judged that the respective flavors of the rice fermented milks are good as a whole. Especially, the rice fermented milks in Examples 5-3 and 5-5 are judged to have a moderate salty taste and achieve a unique and attractive taste. Further, the rice fermented milks in Examples 5-4 and 5-6 are judged to have moderate sweetness and achieve a rich, delicious and easy-to-drink taste.

Furthermore, with respect to the rice fermented milks in Examples 5-1 to 5-6, Table 11 also shows pHs after 16 hours from the start of fermentation. If the pH of the rice fermented milk has a value around the values shown in Table 11, it means that fermentation sufficiently proceeds. In other words, as to general-type fermented milk (yoghurt), if the pH of the fermented milk after 16 hours from the start of fermentation is about 3.8, the pH thereof decreases to about 4 after 3 to 4 hours from the start of fermentation. As to the rice fermented milk, it is found from this fact that good fermentation can be achieved when the fermentation temperature preferably ranges 30 °C to 50 °C, more preferably ranges 35 °C to 45 °C, and further preferably ranges 40 °C to 45 °C and the fermentation time preferably ranges 3 to 24 hours, more preferably ranges 4 to 20 hours, and further preferably ranges 5 to 16 hours. Then, as to the rice fermented milk, it is found that good flavor (taste) can be achieved when the solid content concentration of rice is preferably not lower than 2 wt% and not higher than 15 wt%, more preferably not lower than 3 wt% and not higher than 13 wt%, and further preferably not lower than 4 wt% and not higher than 12 wt%. At that time, as to the rice fermented milk, it is found that good flavor (taste) can be achieved even when the milk solid content concentration is not lower than 1 wt% and not higher than 10 wt%, not lower than 1 wt% and not higher than 8 wt%, or not lower than 1 wt% and not higher than 6 wt%.

### (Production of Rice Slurry by Commercially-Available Grinding Apparatus)

### (Example 6-1)

First, sample rice (brand: Hokuriku 193, unpolished rice) is immersed in distilled water of 5 °C for about 12 hours (one night). Next, the rice after immersion of 1.0 kg and distilled water of 4.0 kg are inputted to a commercially-available grinding apparatus (Supermasscolloider (electric millstone) made by Masuko Sangyo Co., Ltd.) and then wet-ground, to thereby prepare a rice slurry. At that time, a grindstone of model number "MK-E 46 Deep Groove" is used and the rotation speed is 1500 rpm. Further, the wet grinding is performed three times, and respective processing times are one minute at the first time, six minutes and a half at the second time, and six minutes and ten seconds at the third time. Table 12 shows the details of the grinding condition.

### (Example 6-2)

A rice slurry is prepared by using the same grinding apparatus as that used in Example 6-1, where a grindstone is changed to one of model number "MK-GA 120 Standard". At that time, the rotation speed of the grinding apparatus, the number of wet grinding to be performed, the sample rice to be used, and the immersion condition are the same as those in Example 6-1. Respective processing times of wet grinding are, however, one minute at the first time, fourteen minutes and twenty seconds at the second time, and five minutes and ten seconds at the third time (Table 12).

**[Table 12]**

| | Example 6-1 | | | Example 6-2 | | |
|---|---|---|---|---|---|---|
| Grindstone | MK-E 46 Deep Groove | | | MK-GA 120 Standard | | |
| Number of Grindings | 1st | 2nd | 3rd | 1st | 2nd | 3rd |
| Clearance (µm) | 200 | 60 | 40 | 200 | 100 | 100 |
| Weight of Rice (kg) | 1.0 | 1.0 | 1.0 | 1.0 | 1.0 | 1.0 |
| Weight of Distilled Water (kg) | 4.0 | 4.0 | 4.0 | 4.0 | 4.0 | 2.4 |
| Total of Weights (kg) | 5.0 | 5.0 | 5.0 | 5.0 | 5.0 | 3.0 |
| Processing Time (min) | 1'00 | 6'30 | 6'10 | 1'00 | 14'20 | 5'10 |
| Temperature Before Input (°C) | - | 18.0 | 23.0 | - | 19.5 | - |
| Temperature After Grinding (°C) | 18.0 | 23.0 | 27.5 | 19.0 | 38.0 | 31.8 |
| Rise in Temperature (°C) | - | 5.0 | 4.5 | - | 18.5 | - |

### (Evaluation)

In each of Examples 6-1 and 6-2, the mean diameter, the 25% diameter, and the median diameter of rice particle contained in the rice slurry are measured for each wet grinding. Further, the standard deviations of the particle diameters contained in the respective rice slurries in Examples 6-1 and 6-2 are calculated for each wet grinding. Table 13 shows the measurement result and calculation result.

**[Table 13]**

| | Example 6-1 | | | Example 6-2 | | |
|---|---|---|---|---|---|---|
| Number of Grindings | 1st | 2nd | 3rd | 1st | 2nd | 3rd |
| Mean Diameter (µm) | 25.27 | 3.86 | 3.00 | 34.74 | 10.47 | 7.84 |
| Standard Deviation | 0.77 | 0.66 | 0.64 | 0.81 | 0.63 | 0.63 |
| 25% Diameter (µm) | 5.50 | 1.17 | 1.01 | 6.28 | 4.40 | 3.34 |
| Median Diameter (µm) | 31.80 | 3.13 | 2.15 | 39.72 | 6.60 | 5.12 |

From Table 13, it is found that the median diameter of rice particle contained in each of the rice slurries in Examples 6-1 and 6-2 is not larger than 40µm even when the wet grinding is performed once and the median diameter is smaller than any of those of rice particles contained in the aqueous solutions of rice flour, glutinous rice flour, and top-grade rice flour (Table 3). Further, when the wet grinding is performed twice or more, since the median diameter of rice particle becomes not larger than 8 µm and the rice is more refined, it is found that the rice slurry is very excellent in dispersibility and processing suitability.

Furthermore, it is found that even when the wet grinding is performed once, the standard deviation is small, i.e., smaller than 1 and the rice is uniformly ground. When the wet grinding is performed twice or more, the standard deviation becomes not larger than 0.8, and it is found not only that the rice is more refined, but also that the sizes of rice particles become more uniform.

### (Ratio between Rice and Water in Production of Rice Slurry)

By checking the correspondence relation between the amounts of rice and water fed to the grinding apparatus 10 shown in Fig. 2 and the particle diameter of rice contained in the rice slurry, appropriate ratio between rice and water is determined.

### (Example 7-1)

First, sample rice (brand: Hokuriku 193, unpolished rice) is immersed in distilled water of 5 °C for about 12 hours (one night). Next, the rice after immersion and distilled water are fed to the grinding apparatus 10, to thereby prepare a rice slurry. At that time, the amount of rice fed to the grinding apparatus 10 (the feed rate of rice) is 27.5 g/min and the amount of distilled water fed thereto (the feed rate of distilled water) is 46.7 g/min.

### (Example 7-2)

A rice slurry is prepared under the same condition as that in Example 7-1 except the amount of distilled water fed to the grinding apparatus 10. At that time, the amount of distilled water fed thereto (the feed rate of distilled water) is 90.0 g/min.

### (Example 7-3)

A rice slurry is prepared under the same condition as that in Example 7-1 except the amount of distilled water fed to the grinding apparatus 10. At that time, the amount of distilled water fed thereto (the feed rate of distilled water) is 130.0 g/min.

### (Example 7-4)

A rice slurry is prepared under the same condition as that in Example 7-1 except the amounts of rice and distilled water fed to the grinding apparatus 10. At that time, the amount of rice fed thereto (the feed rate of rice) is 17.8 g/min and the amount of distilled water fed thereto (the feed rate of distilled water) is 46.7 g/min.

### (Example 7-5)

A rice slurry is prepared under the same condition as that in Example 7-4 except the amount of distilled water fed to the grinding apparatus 10. At that time, the amount of distilled water fed thereto (the feed rate of distilled water) is 90.0 g/min.

### (Example 7-6)

A rice slurry is prepared under the same condition as that in Example 7-4 except the amount of distilled water fed to the grinding apparatus 10. At that time, the amount of distilled water fed thereto (the feed rate of distilled water) is 130.0 g/min.

### (Evaluation)

In each of Examples 7-1 to 7-6, the mean diameter, the 25% diameter, and the median diameter of rice particle contained in the rice slurry are measured. Further, the ratio of the amount of distilled water fed to the grinding apparatus 10 to the amount of rice fed thereto (the ratio of the feed rate of rice to the feed rate of distilled water) and the standard deviation of the particle diameters contained in the rice slurry in each of Examples 7-1 to 7-6 are calculated. Table 14 shows the measurement result and calculation result. From Table 14, it is found that the median diameter of rice particle contained in the rice slurry in each of Examples 7-1 to 7-6 is not larger than 30 µm and the median diameter is smaller than any of those of rice particles contained in the aqueous solutions of rice flour, glutinous rice flour, and top-grade rice flour (Table 3). Among those, as to Examples 7-1 and 7-4, the median diameter of rice particle is particularly small. Therefore, it is found that in terms of refining of rice, it is preferable that the ratio of the amount of distilled water to be fed to the amount of rice to be fed should be not larger than five times by weight, and more preferable that the ratio should be not larger than three times by weight.

**[Table 14]**

| | Feed Rate of Rice (g/min) | Feed Rate of Distilled Water (g/min) | Feed Rate of Distilled Water / Feed Rate of Rice | Mean Diameter (µm) | Standard Deviation | 25% Diameter (µm) | Median Diameter (µm) |
|---|---|---|---|---|---|---|---|
| Example 7-1 | 27.5 | 46.7 | 1.7 | 3.29 | 0.658 | 0.97 | 1.79 |
| Example 7-2 | 27.5 | 90.0 | 3.3 | 24.22 | 0.780 | 5.31 | 18.38 |
| Example 7-3 | 27.5 | 130.0 | 4.7 | 28.69 | 0.849 | 5.36 | 26.55 |
| Example 7-4 | 17.8 | 46.7 | 2.6 | 16.21 | 0.698 | 4.92 | 7.41 |
| Example 7-5 | 17.8 | 90.0 | 5.1 | 32.20 | 0.784 | 5.86 | 56.28 |
| Example 7-6 | 17.8 | 130.0 | 7.3 | 38.28 | 0.894 | 5.68 | 108.45 |

Further, as to the rice slurry in each of Examples 7-1 to 7-6, it is found that the standard deviation of rice particles is small, i.e., not larger than 1 and the sizes of rice particles are uniform. Especially, it is found that in the rice slurry in each of Examples 7-1 and 7-4, the standard deviation of rice particles is not larger than 0.7 and the sizes of rice particles are more uniform.

### (Summary)

As described above, it is found from above Examples that it is possible not only to accelerate consumption of rice by using the rice slurry in various processed foods but also to manufacture a processed food having flavor and texture unique to rice by using the rice slurry. It is further found that in the rice slurry, the particles of rice are smaller and uniform in size as compared with those of rice flour or the like.

While the invention has been shown and described in detail, the foregoing description is in all aspects illustrative and not restrictive. It is therefore understood that numerous modifications and variations can be devised without departing from the scope of the invention.

## Claims

1. A dairy product-like processed food containing rice.

2. The processed food according to claim 1, wherein
the median diameter of rice particle is not larger than 15 µm.

3. The processed food according to claim 1, wherein
a rice slurry containing particles of ground rice and a dispersion medium is mixed therein.

4. The processed food according to claim 1, wherein
rice flour, glutinous rice flour, or top-grade rice flour is mixed therein.

5. The processed food according to claim 1,
the processed food being pudding which does not contain egg,
wherein a shear stress (temperature: 20 °C) at a shear rate of 100 (1/s) is not lower than 200 Pa and not higher than 10000 Pa, and
the solid content concentration of rice is not lower than 2.5 wt% and not higher than 10 wt%.

6. The processed food according to claim 1,
the processed food being pudding which contains egg,
wherein a shear stress (temperature: 20 °C) at a shear rate of 100 (1/s) is not lower than 200 Pa and not higher than 10000 Pa, and
the solid content concentration of rice is not lower than 1 wt% and not higher than 7 wt%.

7. The processed food according to claim 5,
the processed food being pudding which contains whey protein isolate.

8. The processed food according to claim 6,
the processed food being pudding which contains whey protein isolate.

9. The processed food according to claim 1,
the processed food being fermented milk produced under the condition where a fermentation temperature ranges 30 °C to 50 °C and a fermentation time ranges 3 to 24 hours,
wherein the solid content concentration of rice is not lower than 2 wt% and not higher than 15 wt%.

10. The processed food according to claim 9,
the processed food being fermented milk of which the milk solid content concentration is not lower than 1 wt% and not higher than 10 wt%.

11. A method of manufacturing a dairy product-like processed food, comprising the steps of
wet-grinding rice; and
mixing a rice slurry produced by the wet grinding with a predetermined raw material of the processed food.

12. The manufacturing method according to claim 11, wherein
the step of wet grinding is repeated a plurality of times.
